# EUROPÄISCHE PATENTSCHRIFT

(11) **EP 0 572 771 B1**
(45) Veröffentlichungstag und Bekanntmachung des Hinweises auf die Patenterteilung: **18.12.1996**
(21) Anmeldenummer: 93104514.0
(22) Anmeldetag: 19.03.1993
(51) Int. Cl.: F16C 11/04

(54) **Gelenk mit über eine Anlenkachse gelenkig miteinander verbundenen Gelenkteilen**
Articulation comprising cantilever parts connected via an articulated axle
Articulation avec pièces mobiles reliées par un axe articulé

(30) Priorität: 30.05.1992 DE 4217924
(43) Veröffentlichungstag der Anmeldung: 08.12.1993
(73) Patentinhaber: AKO-ALFRED KOLB KG, D-74889 Sinsheim (DE)
(72) Erfinder: Kolb, Walter, W-6920 Sinsheim-Hoffenheim (DE)
(74) Vertreter: Geitz, Heinrich, Dr.-Ing.

(56) Entgegenhaltungen:
- DE-A- 1 708 135
- DE-A- 2 534 024
- DE-U- 8 619 907
- FR-A- 1 118 941
- US-A- 3 890 672

## Beschreibung

Die Erfindung bezieht sich auf ein Gelenk mit über eine Anlenkachse gelenkig miteinander verbundenen Gelenkteilen, von denen das eine als mit der Anlenkachse fest verbundener Lenker ausgebildet und das andere mit einer die Anlenkachse unter Zwischenlage einer Lagerbuchse aufnehmenden zylindrischen Lagerbohrung versehen ist, wobei die Anlenkachse von einem in einer angepaßten Längsausnehmung der Lagerbuchse aufgenommenen Mehrkantprofil gebildet wird und die Lagerbuchse aus elastisch verformbarem Material besteht.

In der US-A-3 890 672 ist ein Gelenk dieser Art mit zwei gegeneinander verdrehbaren Gelenkteilen vorbeschrieben, bei dem eine Anlenkachse des einen Gelenkteils einen nicht drehbar in einer Lagerbuchse mit zylindrischer Außenkontur aufgenommenen Vierkant aufweist und die Lagerbuchse in einer Lagerbohrung des anderen Gelenkteils aufgenommen ist. Die aus deformierbarem Material bestehende Lagerbuchse besitzt eine größere Längenerstreckung als die Lagerbohrung und ist zwischen einer Schulter des den Vierkant aufweisenden Gelenkteils und einer auf einen über den Vierkant vorstehenden Gewindezapfen aufgeschraubten Mutter so axial verspannbar, daß Reibschluß zwischen der Lagerbuchse und der diese aufnehmenden Lagerbohrung des anderen Gelenkteils auftritt. Demgemäß sind die beiden Gelenkteile nur unter Überwindung eines zwischen der Lagerbuchse und der Lagerbohrung wirkenden Drehmomentes gegeneinander verschwenkbar. Es handelt sich somit um ein Gelenk mit Gangregulierung.

Ein ähnliches Gelenk mit Gangregulierung, bei dem es sich um ein Brillenscharnier handelt, ist in der DE-B-12 24 058 vorbeschrieben. Bei diesem Brillenscharnier ist ebenfalls eine Lagerhülse aus Kunststoff mittels einer Gelenkschraube verspannbar. Dabei ist das Scharnierauge des einen Gelenkteils spielfrei zwischen gabelförmigen Scharnieraugen des anderen Gelenkteils aufgenommen und die Gelenkschraube mit einem der gabelförmigen Scharnieraugen unter gleichzeitiger Verspannung der Lagerhülse mit dem Scharnierauge des gabelförmigen Gelenkteils und dem Scharnierauge des anderen Gelenkteils verschraubt.

Unbefriedigend bei diesen vorbekannten Gelenken ist, daß ein der Verschwenkbarkeit der Gelenkteile entgegenwirkendes Reibmoment nur durch mehr oder weniger starkes Anziehen der Spannmuttern einstellbar ist. Es hat sich gezeigt, daß ein genau definiertes Reibmoment selbst bei engsten Toleranzen zwischen Lagerbuchse und Lagerbohrung nur sehr schwer erreichbar ist. Auch tritt bei derartigen Gelenken verschleißbedingt schon nach kurzer Zeit eine Veränderung des Reibmomentes ein.

Durch die Erfindung soll diesen Unzulänglichkeiten abgeholfen und ein Gelenk geschaffen werden, das einfach im Aufbau ist und eine Gangregulierung mit über längere Zeit im wesentlichen gleichbleibendem Reibmoment aufweist.

Diese Aufgabe ist dadurch gelöst, daß bei dem Gelenk nach dem Oberbegriff des Patentanspruchs 1 die Lagerbuchse als in die Lagerbohrung eingepreßte Reibmomenthülse ausgebildet ist, die im unverformten Zustand vor dem Einpressen in die Lagerbohrung elliptischen Querschnitt mit wenigstens abschnittsweise radial über eine Zylinderform vorstehenden Bereichen aufweist und zumindest mit diesen Bereichen infolge radialer Verformung beim Einpressen reibschlüssig in der Lagerbohrung aufgenommen wird.

Im Gegensatz zu dem durch das Verspannen einer Lagerhülse mittels einer Gelenkschraube gekennzeichneten Lösungsweg bei den vorstehend erörterten Gelenken mit Gangregulierung handelt es sich bei der Erfindung darum, daß eine zumindest abschnittsweise von Hause aus zylindrisch ausgebildete und - über die Polkappen - Übermaß gegenüber der Lagerbohrung aufweisende Reibmomenthülse beim Einpressen in die Lagerbohrung des einen Gelenkteils radial deformiert und dadurch mit den im unverformten Zustand abschnitsweise über eine Zylinderform vorstehenden Bereichen reibschlüssig an die Lagerbohrung angepreßt wird. Dies hat zur Folge, daß beim Verschwenken der mit einem Mehrkantprofil in einer angepaßten Längsausnehmung der Reibmomenthülse aufgenommenen Anlenkachse und des damit drehfest verbundenen Lenkers ein vorbestimmtes Reibmoment zwischen der Lagerbohrung und den an diese angepreßten Bereichen der Reibmomenthülse überwunden werden muß. Die Bemessung der abschnittsweise über eine Zylinderform vorstehenden Bereiche der Reibmomenthülse ermöglicht eine präzise Einstellung des Reibmomentes und es hat sich gezeigt, daß das so eingestellte Reibmoment auch bei längerem Gebrauch im wesentlichen unverändert bleibt.

Zweckmäßigerweise soll die von Hause aus elliptische Reibmomenthülse so bemessen sein, daß der Hülsenumfang dem Umfang der Lagerbohrung unter Berücksichtigung einer vorgegebenen Passung entspricht.

Eine sinnvolle Weiterbildung der Erfindung sieht vor, daß die Erstreckung der - vor dem Einpressen in die Lagerbohrung unverformten - Reibmomenthülse, gemessen über die Polkappen, höchstens 10 % größer ist als die Erstreckung in einer Richtung rechtwinklig zu dem Maß über die Polkappen.

Bei einer derartigen Ausbildung der Reibmomenthülse erfährt diese beim Einpressen in die Lagerbohrung des einen Gelenkteils eine Deformation in Richtung auf eine Zylinderhülse, wobei die Verformung definierte Rückstellkräfte auslöst und diese die Anpressung der in Richtung auf eine Zylinderform verformten Polkappen der ursprünglichen Ellipse an die Lagerbohrung vermitteln.

Eine andere Weiterbildung der Erfindung sieht vor, daß die Anlenkachse mit ihrem Mehrkantprofil in der angepaßten Längsausnehmung der Reibmomenthülse mit eine Verschwenkung der Anlenkachse und damit des Lenkers um einen vorbestimmten Schwenkwinkel ohne Mitdrehung der Reibmomenthülse zulassendem Spiel aufgenommen ist.

Mit dieser Weiterbildung ist ein Gelenk geschaffen worden, bei dem innerhalb eines Verschwenkbereichs mit "gebremster" Bewegung infolge des zwischen der Reibmomenthülse und der Lagerbohrung wirkenden Reibmomentes ein Schwenkwinkelbereich mit "ungebremster" Bewegbarkeit verwirklicht ist. Dieser Schwenkwinkelbereich mit extremer Leichtgängigkeit kann beispielsweise mit 5 Grad bemessen sein. Bei diesem Gelenk handelt es sich somit um ein Lagersystem mit definiertem Spiel.

Grundsätzlich kommen für die Anlenkachse und die dieser angepaßte Längsausnehmung der Reibmomenthülse beliebige Mehrkantprofile in Betracht, die eine formschlüssige Drehmomentenübertragung von der Anlenkachse auf die Reibmomenthülse ermöglichen. Als besonders einfach und damit kostengünstig hat sich jedoch erwiesen, wenn die Anlenkachse und die letztere aufnehmende Längsausnehmung der Reibmomenthülse Vierkantprofil haben.

Eine weitere wichtige Ausgestaltung der Erfindung besteht darin daß die Reibmomenthülse mit sich von deren als Mehrkantprofil ausgebildeten Längsausnehmung radial forterstreckenden Längsnuten versehen ist, die in Umfangsrichtung voneinander beabstandet sind. Die Bemessung dieser Längsnuten ermöglicht eine Einstellung der Federhärte der Reibmomenthülse und damit eine Einstellung des Reibmomentes zwischen der Lagerbohrung und der in diese eingepreßten Reibmomenthülse.

Die Reibmomenthülse kann aus jedwedem für Lagerzwecke geeigneten Kunststoff bestehen. Als besonders zweckmäßig hat sich jedoch die Ausbildung der Reibmomenthülse als glasfaserverstärktes Formteil aus thermoplastischem Kunststoff erwiesen.

Eine Ausführungsform der Erfindung soll nachstehend anhand der beigefügten Zeichnung erläutert werden. In schematischen Ansichten zeigen:
- Fig. 1: die Gelenkteile und die als Reibmomenthülse ausgebildete Lagerbuchse in einer Explosionsdarstellung vor dem Zusammenbau,
- Fig. 2: das Gelenk in einer stirnseitigen Ansicht mit Blick in Richtung der Anlenkachse auf ein als Lenker ausgebildetes Gelenkteil, mit dem die Gelenkachse fest verbunden ist,
- Fig. 3: einen Querschnitt durch das Gelenk,
- Fig. 4: einen Längsschnitt gemäß der Schnittlinie IV-IV in Fig. 3 durch das Gelenk mit nicht geschnitten dargestellter Anlenkachse,
- Fig. 5: die Reibmomenthülse für sich allein in einer stirnseitigen Ansicht und
- Fig. 6: die Reibmomenthülse in einer Seitenansicht zu Fig. 5.

Das in der Zeichnung veranschaulichte Gelenk 10 besteht aus einem Gelenkteil 11 mit einer zylindrischen Lagerbohrung 12, einer als Reibmomenthülse 13 ausgebildeten Lagerbuchse mit einer sich axial in dieser erstreckenden Längsausnehmung 14, einem als Lenker 15 ausgebildeten Gelenkteil und einer Anlenkachse 16. Bei der Anlenkachse handelt es sich um ein Vierkantprofil, deren eines Ende in einer Ausnehmung 17 am Ende des Lenkers 15 aufgenommen und die dadurch dreh- und axialfest mit dem Lenker verbunden ist.

Entsprechend der Ausbildung der Anlenkachse 16 als Vierkantprofil besitzt die zentrale Längsausnehmung 14 der Reibmomenthülse 13 ein angepaßtes Innen-Vierkantprofil, das in unten noch zu beschreibender Weise ein genau definiertes Übermaß gegenüber dem Vierkantprofil der Anlenkachse aufweist. Die Begrenzungsflächen des Innen-Vierkants sind, im Querschnitt gesehen, etwa in der Mitte ihrer Erstreckung jeweils von einer radial gerichteten Nute 18 unterbrochen, die sich über die gesamte Reibmomenthülsenlänge erstrecken und definierte Schwächungen des Hülsenmantels bewirken.

Im übrigen hat die Reibmomenthülse, wie insbesondere Fig. 5 zeigt, von Hause aus elliptischen Querschnitt und, gemessen über die Polkappen 20, 20', Übermaß gegenüber der Lagerbohrung 12 im Gelenkteil 11, hingegen Untermaß gegenüber dieser Lagerbohrung in einer Richtung senkrecht zu dem Maß über die Polkappen. Die Lage der als Innen-Vierkant mit abgeschrägten Ecken ausgebildeten Längsausnehmung 14 ist dabei so gewählt, daß zwei von Längsnuten 18 unterbrochene Begrenzungsflächen den Polkappen 20, 20' zugewandt sind und die beiden anderen Begrenzungsflächen, die ebenfalls von Längsnuten unterbrochen sind, den Flachseiten 21, 21' der Ellipse.

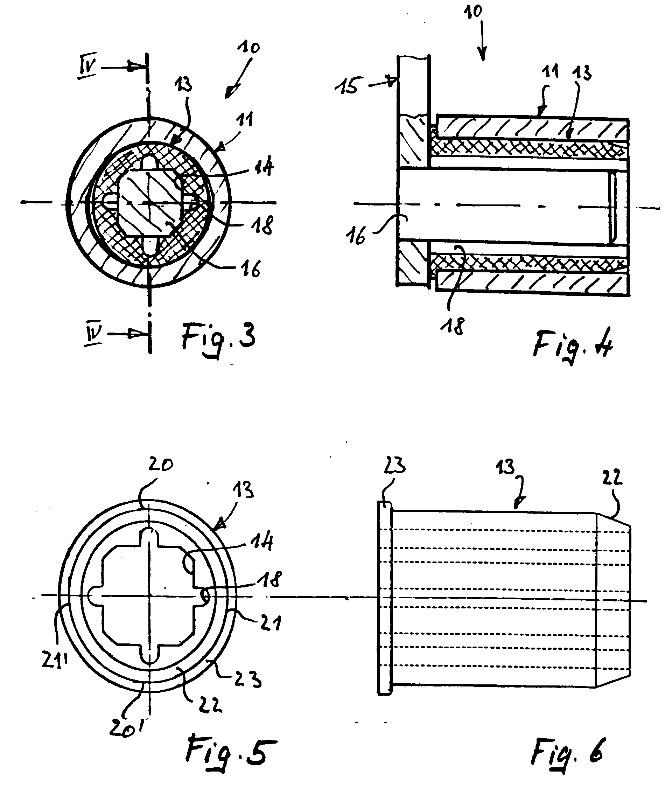

Wie insbesondere aus Fig. 3 ersichtlich ist, schwächen die vorgenannten Längsnuten 18 den Mantel der Reibmomenthülse 13, bei der es sich um ein elastisch verformbares Formteil aus glasfaserverstärktem thermoplastischem Kunststoff handelt. Durch Wahl der Tiefe der die Begrenzungsflächen des Innen-Vierkants 14 unterbrechenden Längsnuten 18 läßt sich naturgemäß die Federhärte der Reibmomenthülse einstellen, die im übrigen an ihrem einen Ende mit einer konischen Anfasung 22 versehen ist und am anderen Ende einen radial vorstehenden Randflansch 23 begrenzter Axialerstreckung aufweist.

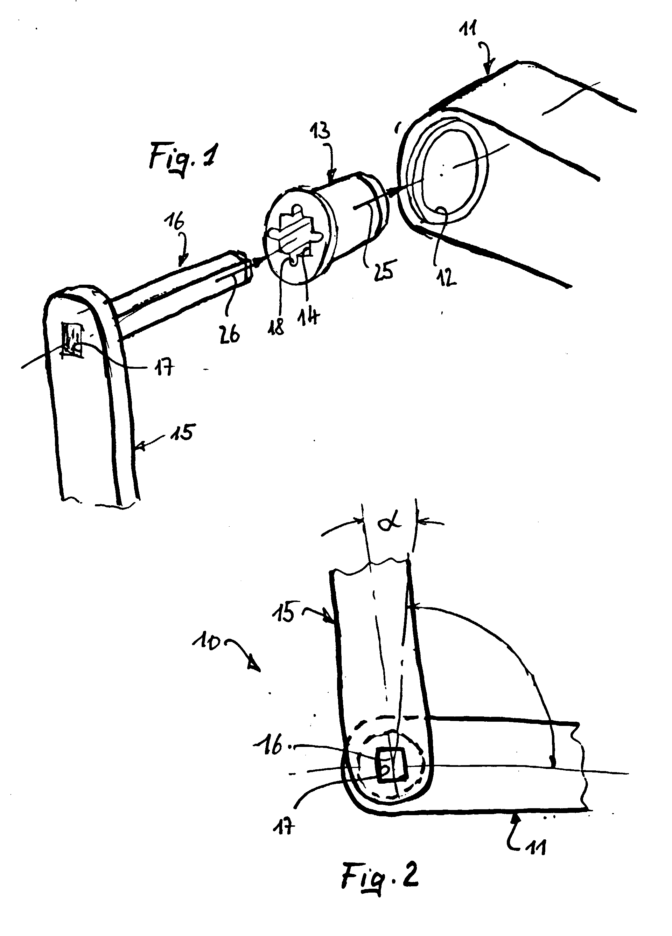

Bei der Montage des Gelenks wird die von Hause aus im Querschnitt elliptisch gestaltete Reibmomenthülse 13 gemäß Pfeil 25 in Fig. 1 mit ihrer die Anschärfung 22 aufweisenden Seite in die Lagerbohrung 12 des Gelenkteils 11 eingepreßt und dabei in Richtung auf eine zylindrische Hülse verformt. Der Umfang der von Hause aus im Querschnitt elliptischen Reibmomenthülse ist so bemessen, daß er dem Umfang der Lagerbohrung 12 unter Berücksichtigung einer vorgegebenen Passung entspricht. Angesichts der beim Einpressen der Reibmomenthülse in die Lagerbohrung 12 auftretenden Hülsenverformung erfährt die Reibmomenthülse eine elastische Verspannung mit der Folge, daß jedenfalls der Hülsenmantel im Bereich der beiden einander gegenüberliegenden Polkappen 20, 20' mit einer gewissen Vorspannung gegen die Innenflächen der zylindrischen Lagerbohrung 12 im Gelenkteil 11 gepreßt wird. In Abhängigkeit von der dabei auftretenden Flächenpressung und dem für die Materialpaarung Reibmomenthülse / Lagerbohrung maßgeblichen Reibungskoeffizienten wirkt somit der Drehung der Reibmomenthülse ein vorbestimmtes Reibmoment entgegen.

Zum Zwecke der Fertigmontage des Gelenks wird die mit dem Lenker 15 dreh- und axialfest verbundene Anlenkachse 16 in Richtung des Pfeils 26 in Fig. 1 in die Längsausnehmung 14 der zuvor in die Lagerbohrung 12 des Gelenkteils 11 bis zur Anlage an der mit dem seinerseits stirnseitig am Gelenkteil 11 anliegenden Randflansch 23 versehenen Stirnende eingepreßten Reibmomenthülse 13 eingeschoben und in hier nicht weiter interessierender und auch nicht dargestellter Weise axial gesichert. Aufgenommen ist die Anlenkachse 16 in dem Innen-Vierkant 14 der Reibmomenthülse 13 mit vorbestimmtem Spiel, so daß eine Verschwenkung des mit der Anlenkachse 16 dreh- und axialfest verbundenen Lenkers 15 gegenüber dem Gelenkteil 11 um einen vorbestimmten Schwenkwinkel α von beispielsweise 5° ohne Mitdrehung der Reibmomenthülse 13 in der Lagerbohrung 12 gelingt. Erst nach dem Überschreiten dieses Leichtgängigkeitsbereichs erfolgt beim weiteren Verschwenken des Lenkers 15 gegenüber dem Gelenkteil 11 eine Mitdrehung der Reibmomenthülse 13 innerhalb der Lagerbohrung 12, wofür jedoch am Lenker 15 ein das zwischen der Reibmomenthülse 13 und der Lagerbohrung 12 wirkende Reibmoment überwindendes Drehmoment aufgebracht werden muß.

Charakteristisch für das erfindungsgemäße Gelenk ist somit, daß innerhalb des Verschwenkbereichs mit "gebremster" Bewegung, die unter Mitdrehung der Reibmomenthülse 13 mit der Anlenkachse 16 und dem damit fest verbundenen Lenker 15 gegenüber dem anderen Gelenkteil erfolgt, ein durch das vorbestimmte Spiel zwischen der Anlenkachse und der diese aufnehmenden Längsausnehmung 14 in der Reibmomenthülse 13 bestimmter Verschwenkbereich extremer Leichtgängigkeit liegt.

## Patentansprüche

1. Gelenk mit über eine Anlenkachse (16) gelenkig miteinander verbundenen Gelenkteilen (11, 15), von denen das eine als mit der Anlenkachse (16) fest verbundener Lenker (15) ausgebildet und das andere mit einer die Anlenkachse (16) unter Zwischenlage einer Lagerbuchse (13) aufnehmenden zylindrischen Lagerbohrung (12) versehen ist, wobei die Anlenkachse (16) von einem in einer angepaßten Längsausnehmung (14) der Lagerbuchse (13) aufgenommenen Mehrkantprofil gebildet wird und die Lagerbuchse (13) aus elastisch verformbarem Material besteht,
dadurch gekennzeichnet,
daß die Lagerbuchse (13) als in die Lagerbohrung (12) eingepreßte Reibmomenthülse ausgebildet ist, die im unverformten Zustand vor dem Einspressen in die Lagerbohrung elliptischen Querschnitt mit wenigstens abschnittsweise radial über eine Zylinderform vorstehenden Bereichen (20, 20') aufweist und zumindest mit diesen Bereichen infolge radialer Verformung beim Einpressen reibschlüssig in der Lagerbohrung (12) aufgenommen wird.

2. Gelenk nach Anspruch 1, dadurch gekennzeichnet, daß die Erstreckung der - vor dem Einpressen in die Lagerbohrung (12) unverformten - Reibmomenthülse (13), gemessen über die Polkappen (20, 20'), höchstens 10 % größer ist als die Erstreckung in einer Richtung rechtwinklig zu dem Maß über die Polkappen.

3. Gelenk nach Anspruch 1 oder 2, dadurch gekennzeichnet, daß die Anlenkachse (16) mit ihrem Mehrkantprofil in der angepaßten Längsausnehmung (14) der Reibmomenthülse (13) mit einem Spiel, das eine Verschwenkung der Anlenkachse und damit des Lenkers (15) um einen vorbestimmten Schwenkwinkel gegenüber der Reibmomenthülse ohne deren Mitdrehung zuläßt, aufgenommen ist.

4. Gelenk nach Anspruch 3, dadurch gekennzeichnet, daß die Anlenkachse (16) und die letztere aufnehmende Längsausnehmung (14) der Reibmomenthülse (13) Vierkantprofil haben.

5. Gelenk nach einem der Ansprüche 1 bis 4, dadurch gekennzeichnet, daß die Reibmomenthülse (13) mit sich von deren als Mehrkantprofil ausgebildeten Längsausnehmung (14) radial in den Hülsenmantel forterstreckenden Längsnuten (18) versehen ist, die in Umfangsrichtung voneinander beabstandet sind.

6. Gelenk nach einem der Ansprüche 1 bis 5, gekennzeichnet durch die Ausbildung der Reibmomenthülse (13) als glasfaserverstärktes Formteil aus thermoplastischem Kunststoff.

## Claims

1. Hinge with hinge parts (11, 15), which are connected together articulatedly by way of a hinge axle and of which the one is constructed as a control lever (15) firmly connected with the hinge axle and the other one is provided with a cylindrical bearing bore (12) receiving the hinge axle with the interposition of a bearing bush (13), wherein the hinge axle is formed by a polygonal profile received in a matched longitudinal recess (14) of the bearing bush (13) and the bearing bush (13) consists of elastically deformable material, characterised thereby, that the bearing bush (13) is constructed as friction moment sleeve which is pressed into the bearing bore (12), originally displays elliptical cross-section with regions (20, 20') projecting radially beyond a cylindrical shape at least in portions and which is received in the bearing bore (12) friction-lockingly at least by these regions in consequence of radial deformation during the pressing-in.

2. Hinge according to claim 1, characterised thereby, that the extent of the friction moment sleeve (13) undeformed before the pressing into the bearing bore (12) and measured over the pole caps (20, 20') is at most 10% greater than the extent in a direction at right angles to the dimension across the pole caps.

3. Hinge according to claim 1 or 2, characterised thereby, that the hinge axle (16) is received by its polygonal profile in the matched longitudinal recess (14) of the friction moment sleeve (13) with a play which permits a pivotation of the hinge axle and thereby of the control lever (15) through a predetermined pivot angle relative to the friction moment sleeve without its co-rotation.

4. Hinge according to claim 3, characterised thereby, that the hinge axle (16) and the longitudinal recess (14), which receives it, of the friction moment sleeve (13) have a tetragonal profile.

5. Hinge according to one of the claims 1 to 4, characterised thereby, that the friction moment sleeve (13) is provided with longitudinal grooves (18), which are spaced one from the other in circumferential direction and extend forth radially into the sleeve casing from its longitudinal recess (14) formed as polygonal profile.

6. Hinge according to one of the claims 1 to 5, characterised by the construction of the friction moment sleeve (13) as glass-fibre-reinforced moulded part of thermoplastic synthetic material.

## Revendications

1. Articulation comprenant deux parties d'articulation (11, 15) reliées d'une manière flexible à un axe directeur, dont une extrémité est fermement liée à la tringle (15) et dont l'autre extrémité pénètre dans un palier (13), en position intermédiaire reposant dans un perçage cylindrique (12) de palier de la tringle menée (11), l'axe directeur pénètrant dans une prise longitudinale (14) du palier (13) présentant plusieurs côtés, le palier (13) étant un matériau élastique déformable,
caractérisée en ce que le palier (13), se présente sous la forme d'une douille à moment de friction lorsqu'il est pressé dans le perçage de palier (12) qui à l'extérieur du logement présente une section transversale elliptique avec au moins une section radiale dans ses sommets de forme cylindrique (20, 20') et qu'au moins sur ces sommets, une déformation radiale résulte de la pression dans le palier cylindrique (12).

2. Articulation selon la revendication 1, caractérisée en ce que l'extension de la douille à moment de friction (13) mesurée sur les sommets (20, 20') est plus grande de 10 % que l'extension dans une direction perpendiculaire à celle de la mesure entre les sommets avant la déformation par pression dans le trou de palier (12).

3. Articulation selon la revendication 1 ou 2, caractérisée en ce que l'axe directeur (16) est monté avec jeu par son profil à plusieurs côtés dans la prise longitudinale (14) de la douille à moment de friction (13) de manière à permettre une oscillation de l'axe directeur et, par suite, du bras (15) sur un angle prédéterminé contre la douille, sans entraînement de celle-ci.

4. Articulation selon la revendication 3, caractérisée en ce que l'axe directeur (16) et la prise longitudinale (14) de la douille à moment de friction (13) ont une section à quatre côtés.

5. Articulation selon l'une des revendications 1 à 4, caractérisée en ce que la prise longitudinale (14) de douille à moment de friction (13) avec une section à plusieurs côtés présente des rainures longitudinales (18) radiales dans le corps de la douille qui sont éloignées l'une de l'autre le long de la circonférence.

6. Articulation selon l'une des revendications 1 à 5, caractérisée en ce que la douille à moment de friction (13) est formée en matière thermoplastique renforcée de fibres de verre.
